(19) Europäisches Patentamt / European Patent Office / Office européen des brevets

(11) **EP 3 721 343 B1**

(12) **EUROPEAN PATENT SPECIFICATION**

(45) Date of publication and mention
of the grant of the patent:
**05.10.2022  Bulletin 2022/40**

(21) Application number: **18887110.7**

(22) Date of filing: **05.12.2018**

(51) International Patent Classification (IPC):
**G06F 9/455** (2018.01)  **G06F 30/20** (2020.01)
**B29C 45/77** (2006.01)  **B29C 45/76** (2006.01)
**G06T 17/00** (2006.01)  **G06F 113/22** (2020.01)

(52) Cooperative Patent Classification (CPC):
**B29C 45/7693; G06F 30/20;** B29C 45/77;
B29C 2945/76498; B29C 2945/76545;
B29C 2945/76665; G06F 2113/22

(86) International application number:
**PCT/US2018/064004**

(87) International publication number:
**WO 2019/113166 (13.06.2019 Gazette 2019/24)**

(54) **PREDICTIVE SIMULATION SYSTEM AND METHOD FOR INJECTION MOLDING**

SYSTEM UND VERFAHREN ZUR PRÄDIKTIVEN SIMULATION FÜR SPRITZGIESSEN

SYSTÈME DE SIMULATION PRÉDICTIVE ET PROCÉDÉ DE MOULAGE PAR INJECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.12.2017  US 201762595705 P**

(43) Date of publication of application:
**14.10.2020  Bulletin 2020/42**

(73) Proprietor: **RJG, Inc.
Traverse City, MI 49686 (US)**

(72) Inventor: **LU, Kuang-Yi
Traverse City
MI 49686 (US)**

(74) Representative: **Ström & Gulliksson AB
P.O. Box 4188
203 13 Malmö (SE)**

(56) References cited:
**EP-A2- 1 044 781**       **WO-A1-2015/058152**
**DE-A1-102013 016 914**  **DE-A1-102015 015 811**
**US-A1- 2004 047 935**   **US-A1- 2005 082 706**
**US-B1- 9 081 923**       **US-B2- 8 364 453**

**US-B2- 8 425 217**       **US-B2- 8 463 584**

- **Gebrehiwot, Silas Sewdie: "Manufacturing and Rehological Analysis of Spiral Flow Test Piece", Degree Thesis Plasics Technology , 15 May 2014 (2014-05-15), pages 1-94, XP055615222, Retrieved from the Internet: URL:https://www.theseus.fi/bitstream/handl e/10024/75407/DEGREE%20THESIS%20COMPL ETE%2 0.pdf?sequence=1&isAllowed=y [retrieved on 2019-03-18]**
- **Autodesk moldflow communicator 2016, Help, user guide, 28 June 2016 (2016-06-28), XP055708666, Retrieved from the Internet: URL:http://help.autodesk.com/view/MFC/2016 /ENU/?guid=GUID-66B3B0E8-DB05-4DC5-8E8F-CC A29A11A7ED [retrieved on 2019-03-18]**

**(Cont. next page)**

- Huamin Zhou: "Frontmatter", Computer Modeling for Injection Molding: Simulation, Optimization, and Control, 31 December 2013 (2013-12-31), pages i-xv, XP009521553, DOI: 10.1002/9781118444887.fmatter ISBN: 978-0-470-60299-7 Retrieved from the Internet: URL:https://www.researchgate.net/profile/Vitalii_Pertsevyi/post/Design_a_cooling_system_for_complex_part_in_Injection_molding_preocess_using_analytical_way/attachment/59d631cl79197b807798f866/AS%3A3674518764134 47%401464618762738/download/zhou_h_computer_modeling_for_injection_molding_simulation_op.pdf [retrieved on 2019-03-18]

## Description

## FIELD OF TECHNOLOGY

The present disclosure pertains to a predictive simulation system and method for an injection molding process.

## BACKGROUND

Injection molding is a common manufacturing process in which a material, including, but not limited to, thermoplastic, thermoset, or elastomer material, is injected into a mold. A typical injection molding system includes an injection unit, a mold, and a clamp unit, where the injection unit injects the material under certain parameters and conditions into the mold, during which the clamp unit holds the mold closed.

Simulation programs have been developed to simulate the injection molding process so that molds, injection parameters, and the like could be optimized prior to actually injection molding parts in mass to ensure higher quality and consistency of the parts. Such simulation programs have focused primarily on modeling the mold only. As a consequence, injection pressure has not been able to be consistently predicted, as it is named as "pressure loss" or "sprue pressure", and therefore, discrepancies between prediction and actual molded parts such as cavity pressure, part dimension, clamp force requirement, etc. can be observed. An example of a method for obtaining a resin and injection pressure curve is disclosed in EP 1 044 781 A2.

Accordingly, an improved system and method is presented that more effectively simulates an injection molding process to minimize discrepancies during injection molding processes and avoid any defects in the resulting products.

## BRIEF DESCRIPTION OF THE DRAWINGS

Referring now to the drawings, illustrative embodiments are shown in detail. Although the drawings represent some embodiments, the drawings are not necessarily to scale and certain features may be exaggerated, removed, or partially sectioned to better illustrate and explain the present disclosure. Further, the embodiments set forth herein are not intended to be exhaustive or otherwise limit or restrict the claims to the precise forms and configurations shown in the drawings and disclosed in the following detailed description.

FIG. 1 is a schematic system and data flow diagram of an exemplary simulation system and the data exchange therein;

FIG. 2 is a schematic diagram of the force and pressure distribution of an injection molding machine of the simulation system of FIG. 1;

FIG. 3 is a schematic flow diagram of an exemplary method for using the simulation system of FIG. 1 to accurately obtain variables to use in a real-time injection molding process;

FIG. 4 is a schematic flow diagram of an exemplary simulation method for simulating the injection molding process;

FIG. 5A is an exemplary mesh domain of a mold structure generated during the simulation method of FIG. 4;

FIG. 5B is an exemplary mesh domain of an air cavity structure generated during the simulation method of FIG. 4;

FIGS. 6A-6C are graphic illustrations of a progression of the simulation method;

FIG. 7A and 7B are graphical comparisons of injection pressure and cavity pressure as functions of time resulting from the simulation of FIG. 3, an existing simulation approach, and an actual injection molding output;

FIG. 8 is an exemplary graph of predictive data that is output by the system of FIG. 1;

FIG. 9 is a graphical comparison of the predictive data from FIG. 8 with actual measured data; and

FIGS. 10 and 11 are exemplary graphs of predictive data that is output by the system of FIG. 1.

## DETAILED DESCRIPTION

Methods, systems, and apparatus, including computer programs encoded to perform calculation, predict the requirement of key injection molding machine specification, confidence of mold cavity fill and progression, molding machine-dependent process parameters and potential molding issues without the need of any prior measurement data or trial operation for the simulation inputs. The method proceeds to mesh and connect both the injection mold and machine component dimensions, including, but not limited to, the injection unit configuration and its process parameters. The method may simulate the screw/plunger dynamic movement and calculate the melt transfer from the injection unit, or hot runner if applicable to the mold cavity. With this method, the process compatibility of mold and machine can be assessed more precisely and process development can be optimized and completed prior to the tool tryouts.

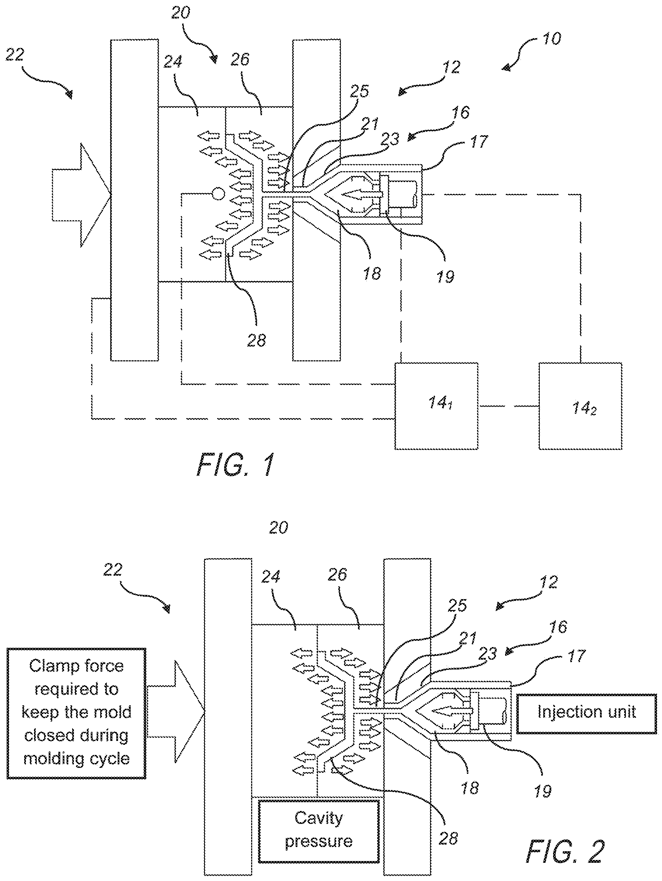

Referring now to the figures, FIG. 1 illustrates an exemplary system 10 that may be utilized to perform predictive simulations of an injection molding process. The system 10 generally may include an injection molding machine 12 and computing devices 141 and 142. The computing devices 141 and 142 may be used to run simulations of injection molding processes, predict, acquire and process data, store data, and the like. It should be appreciated that a single computing device may be used to perform all the functions of computing devices 14₁ and 142. The system 10 may also include one or more data stores (not shown) that may store such data as machine parameters, historical outputs, and the like. It should be appreciated that a data store may be internal to any one of the computing device 14₁ and 142 and the injection molding machine, may be external and/or remotely located. The injection molding machine 12 and the computing devices 141 and 142 may communicate with each other over a communications network. Such a communications network may include, but is not limited to any combination of, Ethernet, Bluetooth, Wi-Fi, Wi-Fi protocols (802.11b, 802.11g, 802.11n, etc.), 3G, 4G, 5G, LTE, or any other wired or wireless communications mechanisms. The injection molding machine 12 may also include a controller or other computing device (not shown) that may communicate with the computing devices 141 and 142 over the communications network.

The injection molding machine 12 may include an injection unit 16 at which a material 18 may be injected into an injection mold 20, and a clamp unit 22 configured to keep the injection mold 20 closed during the injection molding process. As seen in FIGS. 1 and 2, the injection unit 16 generally has a barrel 17 with a screw or plunger 19 positioned therein to deliver the material 18 through a nozzle 21 into the injection mold 20. The injection unit 16 may include an end cap 23 connecting the barrel 17 with the nozzle 21. The injection mold 20 in turn may include mold halves 24 and 26 that together define one or more mold cavities 28. The injection mold 20 may also include one or more runners 25 into which the material 18 enters from the nozzle 21 and into the one or more cavities 28. It should be appreciated the mold cavity 28 may have any defined shaped. It should further be appreciated that there may be multiple mold cavities formed in one mold configuration.

The injection molding machine 10 may implement various sensors located at different locations within the injection unit 16, the injection mold 20, and/or the clamp unit 22, and may be configured to measure different measurements at each location. The sensors may include, but are not limited to, a stroke sensor for measuring the position and/or speed of the screw, a pressure sensor in the mold cavity 28 for measuring pressure within the mold cavity 28 while the material 18 is being injected therein, temperature sensors, and a proximity sensor configured to detect whether the mold 20 is open or closed. The sensors may be in communication with one or more of the computing devices 14₁ and 142 and a controller of the injection molding machine 12 if it is equipped with one, for example, over the communications network, to provide data to be processed and/or stored.

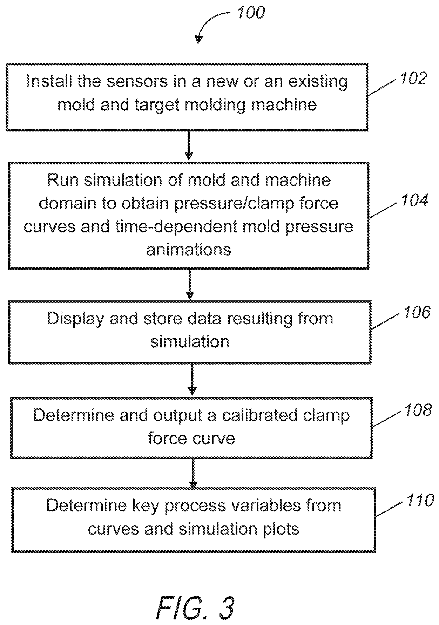

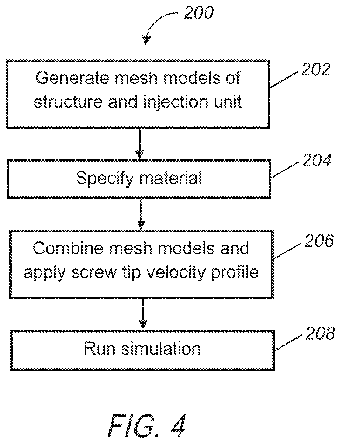

Referring now to FIG. 3, an exemplary method 100 for using system 10 to accurately determine variables to use in a real-time injection molding process is shown. Method 100 may begin at step 102 in which sensors may be installed in a mold, which may be a new or an existing mold, and in a target injection molding machine. At step 104, a simulation of the target injection molding machine and mold may be run, for example, via computing device 142, to obtain forecasted process condition, pressure and clamp force curves, and time-dependent pressure/temperature animations of the simulation objects. The simulation may be performed according to method 200 illustrated in FIG. 4 and described below.

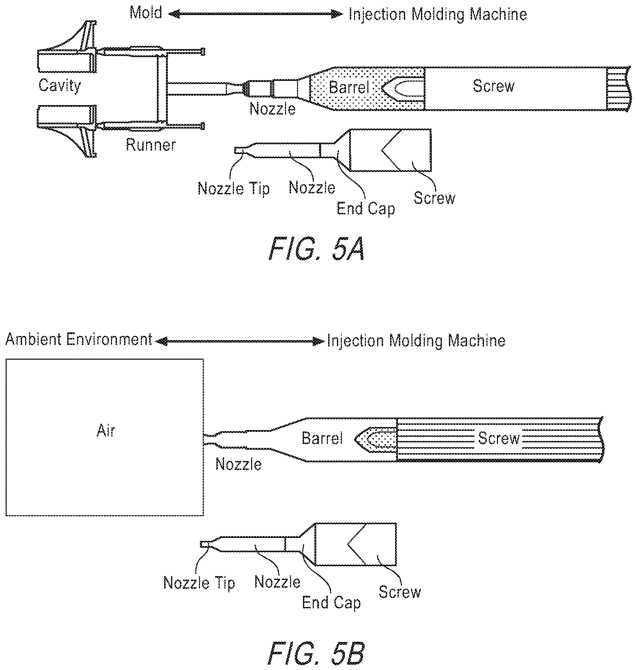

Referring now to FIG. 4, an exemplary simulation method 200 is illustrated. The simulation method 200 may begin at step 202 in which a mesh model of a structure to be injected may be generated. The structure may be of the mold cavity defined by the mold 20, which may include a runner system (one or more runners) and mold cavity(ies), or alternatively, an air cavity. Where the structure is an air cavity, a pressure predicted as an air shot pressure for the injection molding machine may be used. At step 204, a mesh model of the injection unit may then be generated. The mesh model includes, but is not limited to, at least the screw, including the screw diameter, the screw tip and its profile in three zones, non-return valve mechanism, barrel size and diameter, end cap design, and nozzle design and configurations. Exemplary meshes are illustrated in FIGS. 5A (with the mold) and 5B (with the air cavity).

The surface mesh of the screw tip may indicate the stroke position or shot volume in the molding process. The tip contour may be used as a moving boundary to push the melt volume (material) toward the structure. The movement of the boundary may embody movement of the screw in the injection molding process, which may be controlled either in a speed or pressure setting of injection unit or external signals such as cavity pressure.

At step 206, the material may be specified, and the melt and ambient temperatures of each zone of the injection unit and the structure may be configured. Where the structure is a mold, zones may include the hot runner system, if applicable. At step 208, the mesh models of both the structure (mold cavity or air cavity) and the injection unit domains may be combined, and velocity and pressure profile of the screw tip may be applied. At step 210, the simulation may be run. When the molding machine is in a velocity control phase, compression force is required to transfer the melt ahead of the screw into the structure. The injection pressure, as an output of the molding machine to move the screw is predicted by the resultant force by the cross-sectional area of the screw. When the molding machine is in a pressure control phase, the applied pressure of the molding machine is equivalent to the force divided by the cross-sectional area of the screw according to the following formula:

$$F(t) = P(t) \, X \, A$$

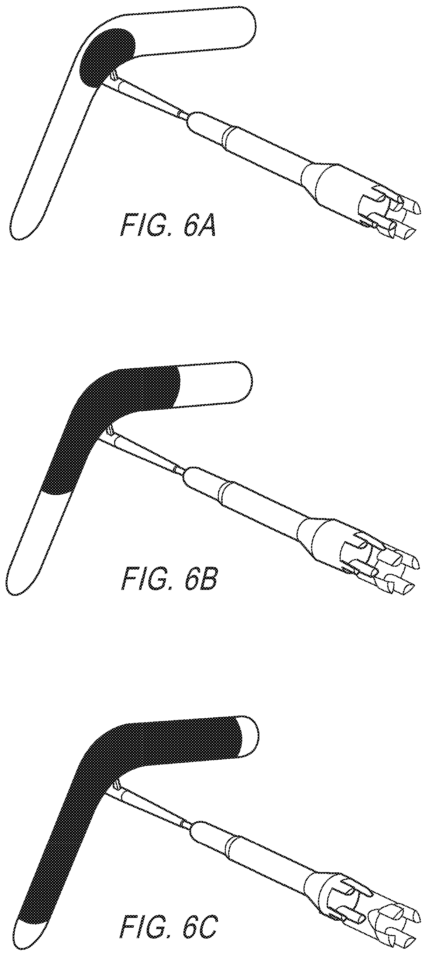

The simulation method may determine the history of physical fields of both injection unit and mold cavity domain throughout the molding process, including the pressure, temperature, velocity, shear rate, particle movement, viscosity, filler orientation/percentage and density. The reciprocating movement of the screw may then be modeled to determine the melt behavior of the material in both the structure and the injection molding machine, as illustrated in FIGS. 6A-6C.

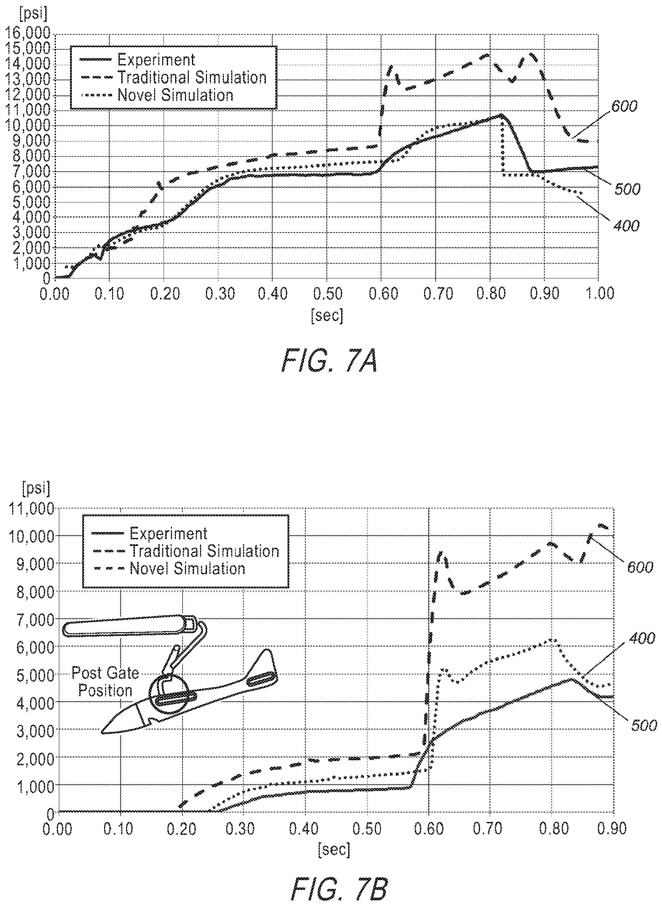

The inclusion of the injection unit in the mesh model results in more accuracy as illustrated in FIG. 7A and 7B, which graphically illustrate the injection pressure and cavity pressure as functions of time, respectively. In FIG. 7A, the simulation with the injection unit model exhibits a much similar waveform of injection pressure curve comparing to the simulation with only the mold domain. In FIG. 7B, the curve 400 resulting from the simulation method 200 is closer to the curve 500 actually measured by cavity pressure sensor than the curve 600 of a simulation method only modeling the mold. In particular, the pressure magnitude and melt front arrival time is much closer, as the simulation with the injection unit model numerically calculates the compressibility of the melt in the injection unit.

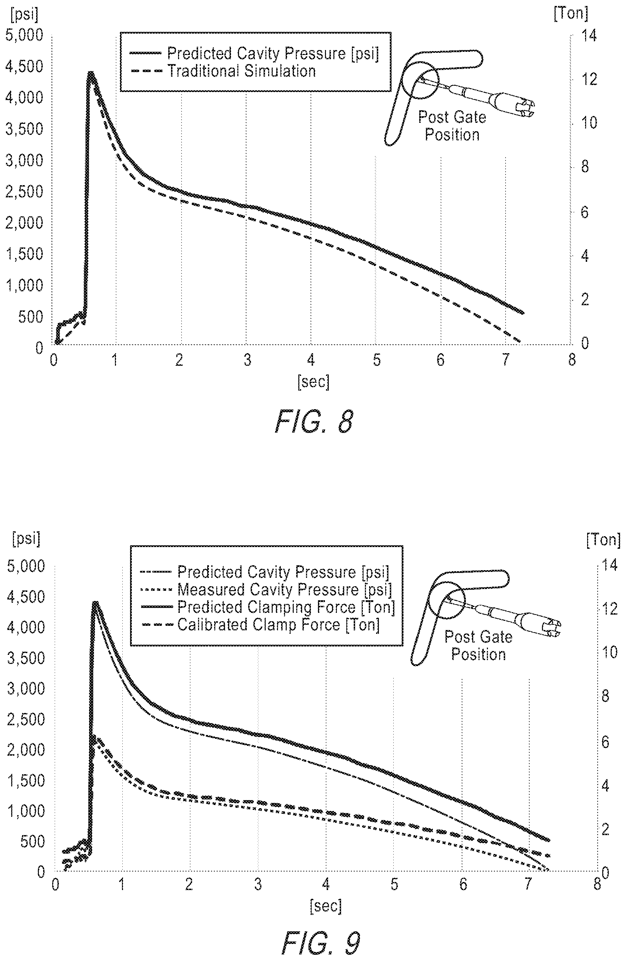

Referring back to FIG. 3 and method 100, at step 106, the data acquisition system (e.g., computing device $14_1$) may display and store the data resulting from the simulation method 200. The data may be in the form of curves, which may include, but are not limited to, a curve of stroke position versus time, a predicted plastics injection pressure curve, a predicted cavity pressure history curve, a mold temperature history curve, a plastics temperature curve, and a nozzle pressure curve. The mold temperature curves may be for metal or plastic. FIG. 8 illustrates an exemplary predicted flow front pattern and pressure distribution of the mold cavity, predicted post gate pressure curve and corresponding clamp force plot history by simulation that may be displayed at step 106.

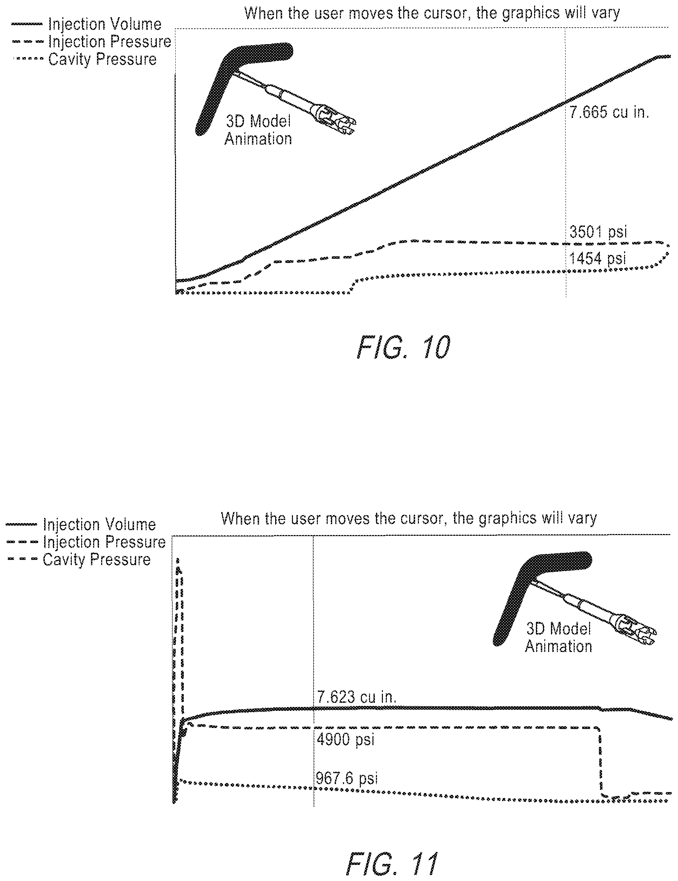

At step 108, a calibrated clamp force curve may be determined and outputted, for example on the computing device 141, when taking into consideration predicted pressure, as determined from the simulation method 200, and measured pressure as measured by a cavity pressure sensor. As an exemplary output, FIG. 9 illustrates the calibrated clamp force compared to the predicted clamping force. FIG. 10 illustrates a calibrated clamp force display with a flow front progression cavity pressure. The rendered flow front model may be displayed as a static display or as a dynamic display that illustrates different filling percentage/pressure distribution at different time and stroke positions. By moving a cursor, the fill percentage of the model display may change in the system. FIG. 11 illustrates a calibrated clamp force display along with cavity pressure distribution after the mold cavity is filled. By moving the cursor in the plot on the X-axis (time), the cavity pressure plot may change. Changes in the injection speed, pack/hold pressure, and/or the material may also change the pressure measurement, though the sensor reading and clamp force will maintain the similar wave form.

At step 110, tool operators, e.g., molders, may follow the curves and simulation plots to determine key process variables for real-time injection molding. For example, the predicted plastics pressure curve can be saved in a digital format to display on the machine panel or external process monitoring devices for the molders to use as machine process template to set up the process parameter accordingly. Similarly, the predicted cavity pressure history curves can be saved in a digital format to display on the machine panel or external process monitoring devices for the molders to use as a cavity pressure template to match the cavity pressure curves if the mold is instrumented with sensors. Further, predicted clamp force history may be used to estimate clamp tonnage requirement in various process conditions to prevent molding issues. The curves can be output on the machine panel or external process monitoring devices for molders to set adequate clamp force. When the mold is transferred to other molding machines with different screw size and clamp tonnage capacity, the injection unit may be remodeled in the simulation domain via method 200, and the capability and machine-dependent process parameters may be evaluated accordingly. It should be appreciated that all the curves generated, for example, in step 106, can be saved as machine process templates for use by molders.

As described above and illustrated in the figures, the system 10 and method 100 allow for a more realistic flow rate to be predicted as it is associated with and accounts for the screw movement and compressibility of the melt in the injection unit and hot runner system if applicable. As illustrated in FIGS. 7A and 7B, the injection pressure and cavity pressure prediction in both magnitude and waveform are more sensitive in the traditional molding simulation (i.e., without injection unit model), while the system 10 and method 100 result in both waveform and magnitude being closer to the data actually collected from the injection molding machine via sensors.

In general, computing systems and/or devices, such as the computing devices 141 and $14_2$, may include at least one memory and at least one processor. Moreover, they may employ any of a number of computer operating systems, including, but not limited to, versions and/or varieties of the Microsoft Windows® operating system, the Unix operating system (e.g., the Solaris® operating system distributed by Oracle Corporation of Redwood Shores, California), CentOS, the AIX UNIX operating system distributed by International Business Machines of Armonk, New York, the Linux operating system, the Mac OS X and iOS operating systems distributed by Apple Inc. of Cupertino, California, the BlackBerry OS distributed by Research In Motion of Waterloo, Canada, and the Android operating system developed by the Open Handset Alliance. Examples of computing devices include, without limitation, a computer workstation, a server, a desktop, a notebook, a laptop, a handheld computer, a smartphone, a tablet, or some other computing system and/or device.

Such computing devices generally include computer-executable instructions, where the instructions may be executable by one or more computing devices such as those listed above. Computer-executable instructions may be compiled or interpreted from computer programs created using a variety of programming languages and/or technologies, including, without limitation, and either alone or in combination, Java™, C, C++, C#, Objective C, Visual Basic, Java Script, Perl, Tomcat, representational state transfer (REST), etc. In general, the processor (e.g., a microprocessor) receives instructions, e.g., from the memory, a computer-readable medium, etc., and executes these instructions, thereby performing one or more processes including one or more of the processes described herein. Such instructions and other data may be stored and transmitted using a variety of computer-readable media.

A computer-readable medium (also referred to as a processor-readable medium) includes any non-transitory (e.g., tangible) medium that participates in providing data (e.g., instruction) that may be read by a computer (e.g., by a processor of a computer). Such a medium may take many forms, including, but not limited to, non-volatile media and volatile media. Non-volatile media may include, for example, optical or magnetic disks and other persistent memory. Volatile media may include, for example, dynamic random access memory (DRAM), which typically constitutes a main memory. Such instructions may be transmitted by one or more transmission media, including, but not limited to, coaxial cables, copper wire, and fiber optics, including the wires that comprise a system bus coupled to a processor of a computer. Common forms of computer-readable media include, for example, a floppy disk, a flexible disk, magnetic tape, any other magnetic medium, a CD-ROM, DVD, any other optical medium, punch cards, paper tape, any other physical medium with patterns of holes, a RAM, a PROM, an EPROM, a FLASH-EEPROM, any other memory chip or cartridge, or any other medium from which a computer can read.

Databases, data repositories or other data stores may include various kinds of mechanisms for storing, accessing, and retrieving various kinds of data, including a hierarchical database, a set of files in a file system, an application database in a proprietary format, a relational database management system (RDBMS), etc. Each such data store is generally included within a computing device employing a computer operating system such as one of those mentioned above, and are accessed via a network in any one or more of a variety of manners. A file system may be accessible from a computer operating system, and may include files stored in various formats. An RDBMS generally employs the Structured Query Language (SQL) in addition to a language for creating, storing, editing, and executing stored procedures, such as the PL/SQL language mentioned above.

In some examples, system elements may be implemented as computer-readable instructions (e.g., software) on one or more computing devices (e.g., servers, personal computers, etc.), stored on computer readable media associated therewith (e.g., disks, memories, etc.). A computer program product may comprise such instructions stored on computer readable media for carrying out the functions described herein. Alternatively, the application software product may be provided as hardware or firmware, or combinations of software, hardware, and/or firmware.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Even though the present disclosure has been described in detail with reference to specific embodiments, it will be appreciated that the various modifications and changes can be made to these embodiments without departing from the scope of the present disclosure as set forth in the claims. The specification and the drawings are to be regarded as an illustrative thought instead of merely restrictive thought.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

## Claims

1. A method (100, 200) for simulating an injection molding process, comprising:

   generating a mesh model (202) of a mold structure;
   generating a mesh model (204) of an injection unit (16) of an injection molding machine (12), including at least a screw tip of the injection unit (16) and a barrel (17) size and diameter;
providing the ability to specify a material (18) to be injected into the mold structure;
configuring parameters in different zones of at least the injection unit (16);
combining (208) the mesh models (202) of the mold structure and the injection unit (204);
providing the ability to apply at least one of a velocity and a pressure profile of the screw tip; and
running a simulated operation (210) of the combined (208) mesh models of the injection unit and the mold structure.

2. The method of claim 1, wherein the mold structure is a mold cavity (28) defined by a mold of an injection molding system.

3. The method of anyone of claims 1 or 2, wherein the mesh model (204) of the injection unit (16) includes at least a screw tip and diameter, an end cap, and a nozzle of the injection unit (16).

4. The method of anyone of claims 1 to 3, wherein the parameters include at least a melt temperature at which the material (18) is to be heated in each zone, and an ambient temperature.

5. The method of anyone of claims 1 to 4, further comprising outputting a curve of stroke position versus time as a machine process template.

6. The method of anyone of claims 1 to 5, further comprising outputting at least one of a predicted plastics injection pressure curve, a predicted cavity pressure history curve, and a mold temperature history curve.

7. The method of anyone of claims 1 to 6, further comprising outputting the predicted cavity pressure history curve as a mold process matching template.

8. The method of anyone of claims 1 to 7, further comprising outputting the mold temperature history curve as a mold process matching template.

9. The method of anyone of claims 1 to 8, further comprising displaying prediction results on a display of the computing device (141, 142) of the simulated operation as a static display or a dynamic display.

10. A system (10) comprising:

an injection molding machine including an injection unit (16) having at least a screw and a barrel (17), the screw being positioned in the barrel (17) to deliver a material through a nozzle into an injection mold;
at least one computing device (141, 142) configured to:

generate a mesh model (202) of a mold structure;
generate a mesh model (204) of the injection unit, including at least the screw and a barrel size and diameter;
receive a specification of the material (18) to be injected into the mold structure;
receive a configuration of parameters in different zones of at least one of the injection unit and the mold structure;
combine (208) the mesh models of the mold structure and the injection unit;
provide the ability to apply at least one of a velocity profile and a pressure profile of the screw tip; and
run a simulated operation (210) of the combined mesh models of the injection unit and the mold structure.

11. The system of claim 10, wherein the mesh model (202) of the injection unit (16) includes at least a screw tip and diameter, an end cap, and a nozzle of the injection unit.

12. The system of anyone of claims 10 to 11, wherein the parameters include at least a melt temperature at which the material is to be heated in each zone, and an ambient temperature.

13. The system of anyone of claims 10 to 12, wherein the computing device (141, 142) is configured to output at least one of:

a curve of stroke position versus time as a machine process template;
a predicted plastics injection pressure curve as a machine process template;
a predicted cavity pressure history curve as a machine process template;
a mold temperature history curve as a machine process template;
a plastics temperature curve as a machine process template; and
a nozzle pressure curve as a machine process template.

14. A non-transitory computer readable medium tangibly embodying computer-executable instructions that when executed by a processor cause the processor to perform operations comprising:

generating a mesh model (202) of a mold structure;
generating a mesh model (204) of an injection unit (16) of an injection molding machine, including at least a screw tip of the injection unit and a size and diameter of a barrel (17);
providing the ability to specify a material (18) to be injected into the mold structure;
configuring parameters in different zones of at least one of the injection unit (16) and the mold structure;
combining (208) the mesh models of the mold structure and the injection unit (16);
providing the ability to apply at least one of a velocity and a pressure profile of the screw tip; and
running a simulated operation (210) of the combined mesh models of the injection unit (16) and the mold structure.

15. The non-transitory computer readable medium of claim 14, wherein the mold structure is a mold cavity (28) defined by a mold of an injection molding system.

**Patentansprüche**

1. Verfahren (100, 200) zum Simulieren eines Spritzgießprozesses, umfassend:

Erzeugen eines Netzmodells (202) einer Formstruktur;
Erzeugen eines Netzmodells (204) einer Spritzeinheit (16) einer Spritzgießmaschine (12), einschließlich mindestens einer Schraubenspitze der Spritzeinheit (16) und einer/-em Zylinder(17)-größe und -durchmesser;
Bereitstellen der Fähigkeit, um ein Material (18) zu spezifizieren, das in die Formstruktur eingespritzt werden soll;
Konfigurieren von Parametern in verschiedenen Zonen von mindestens der Spritzeinheit (16);
Kombinieren (208) der Netzmodelle (202) der Formstruktur und der Spritzeinheit (204);
Bereitstellen der Fähigkeit, mindestens eines von einer Geschwindigkeit und einem Druckprofil der Schraubenspitze anzuwenden; und
Ausführen eines simulierten Betriebs (210) der kombinierten (208) Netzmodelle der Spritzeinheit und der Formstruktur.

2. Verfahren nach Anspruch 1, wobei die Formstruktur ein Formhohlraum (28) ist, der durch eine Form eines Spritzgießsystems definiert ist.

3. Verfahren nach einem der Ansprüche 1 oder 2, wobei das Netzmodell (204) der Spritzeinheit (16) mindestens eine Schraubenspitze und einen Durchmesser, eine Endkappe und eine Düse der Spritzeinheit (16) einschließt.

4. Verfahren nach einem der Ansprüche 1 bis 3, wobei die Parameter mindestens eine Schmelztemperatur, bei der das Material (18) in jeder Zone erwärmt werden soll, und eine Umgebungstemperatur einschließen.

5. Verfahren nach einem der Ansprüche 1 bis 4, ferner umfassend ein Ausgeben einer Kurve der Hubposition gegenüber der Zeit als eine Maschinenprozessvorlage.

6. Verfahren nach einem der Ansprüche 1 bis 5, ferner umfassend das Ausgeben mindestens eines von einer vorhergesagten Kunststoffspritzdruckkurve, einer vorhergesagten Hohlraumdruckverlaufskurve und einer Formtemperaturverlaufskurve.

7. Verfahren nach einem der Ansprüche 1 bis 6, ferner umfassend das Ausgeben der vorhergesagten Hohlraumdruckverlaufskurve als eine Formprozessübereinstimmungsvorlage.

8. Verfahren nach einem der Ansprüche 1 bis 7, ferner umfassend das Ausgeben der Formtemperaturverlaufskurve als eine Formprozessübereinstimmungsvorlage.

9. Verfahren nach einem der Ansprüche 1 bis 8, ferner umfassend ein Anzeigen von Vorhersageergebnissen auf einer Anzeige der Rechenvorrichtung (141, 142) des simulierten Betriebs als eine statische Anzeige oder eine dynamische Anzeige.

10. System (10), umfassend:

eine Spritzgießmaschine, einschließlich einer Spritzeinheit (16), die mindestens eine Schraube und einen Zylinder (17) aufweist, wobei die Schraube in dem Zylinder (17) positioniert ist, um ein Material durch eine Düse in eine Spritzgießform abzugeben;
mindestens eine Rechenvorrichtung (141, 142), die konfiguriert ist zum:

Erzeugen eines Netzmodells (202) einer Formstruktur;
Erzeugen eines Netzmodells (204) der Spritzeinheit, einschließlich mindestens der Schraube und einer/-em Zylindergröße und -durchmesser;
Empfangen einer Spezifikation des Materials (18), das in die Formstruktur eingespritzt werden soll;
Empfangen einer Konfiguration von Parametern in verschiedenen Zonen von mindestens einer der Spritzeinheit und der Formstruktur;
Kombinieren (208) der Netzmodelle der Formstruktur und der Spritzeinheit;

Bereitstellen der Fähigkeit, um mindestens eines von einem Geschwindigkeitsprofil und einem Druckprofil der Schraubenspitze anzuwenden; und

Ausführen eines simulierten Betriebs (210) der kombinierten Netzmodelle der Spritzeinheit und der Formstruktur.

11. System nach Anspruch 10, wobei das Netzmodell (202) der Spritzeinheit (16) mindestens eine Schraubenspitze und einen Durchmesser, eine Endkappe und eine Düse der Spritzeinheit einschließt.

12. System nach einem der Ansprüche 10 bis 11, wobei die Parameter mindestens eine Schmelztemperatur, bei der das Material in jeder Zone erwärmt werden soll, und eine Umgebungstemperatur einschließen.

13. System nach einem der Ansprüche 10 bis 12, wobei die Rechenvorrichtung (141, 142) konfiguriert ist, um mindestens eines auszugeben von:

einer Kurve der Hubposition gegenüber der Zeit als eine Maschinenprozessvorlage;
einer vorhergesagten Kunststoffspritzdruckkurve als eine Maschinenprozessvorlage;
einer vorhergesagten Hohlraumdruckverlaufskurve als eine Maschinenprozessvorlage;
einer Formtemperaturverlaufskurve als eine Maschinenprozessvorlage;
einer Kunststofftemperaturkurve als eine Maschinenprozessvorlage; und
einer Düsendruckkurve als eine Maschinenprozessvorlage.

14. Nichtflüchtiges computerlesbares Medium, das greifbar computerausführbare Anweisungen verkörpert, die, wenn sie durch einen Prozessor ausgeführt werden, den Prozessor veranlassen, Betriebe durchzuführen, umfassend:

Erzeugen eines Netzmodells (202) einer Formstruktur;
Erzeugen eines Netzmodells (204) einer Spritzeinheit (16) einer Spritzgießmaschine, einschließlich mindestens einer Schraubenspitze der Spritzeinheit und einer Größe und einem Durchmesser eines Zylinders (17);
Bereitstellen der Fähigkeit, um ein Material (18) zu spezifizieren, das in die Formstruktur eingespritzt werden soll;
Konfigurieren von Parametern in verschiedenen Zonen von mindestens einer der Spritzeinheit (16) und der Formstruktur;
Kombinieren (208) der Netzmodelle der Formstruktur und der Spritzeinheit (16);
Bereitstellen der Fähigkeit, mindestens eines von einer Geschwindigkeit und einem Druckprofil der Schraubenspitze anzuwenden; und
Ausführen eines simulierten Betriebs (210) der kombinierten Netzmodelle der Spritzeinheit (16) und der Formstruktur.

15. Nichtflüchtiges computerlesbares Medium nach Anspruch 14, wobei die Formstruktur ein Formhohlraum (28) ist, der durch eine Form eines Spritzgießsystems definiert ist.

**Revendications**

1. Procédé (100, 200) pour simuler un processus de moulage par injection, comprenant :

la génération d'un modèle de maillage (202) d'une structure de moule ;
la génération d'un modèle de maillage (204) d'une unité d'injection (16) d'une machine de moulage par injection (12), comportant au moins une pointe de vis de l'unité d'injection (16) et une taille et un diamètre de cylindre (17) ;
la fourniture de la capacité de spécifier un matériau (18) à injecter dans la structure de moule ;
la configuration de paramètres dans différentes zones d'au moins l'unité d'injection (16) ;
la combinaison (208) des modèles de maillage (202) de la structure de moule et de l'unité d'injection (204) ;
la fourniture de la capacité d'appliquer un profil de vitesse et/ou de pression de la pointe de vis ; et
l'exécution d'un fonctionnement simulé (210) des modèles de maillage combinés (208) de l'unité d'injection et de la structure de moule.

2. Procédé selon la revendication 1, dans lequel la structure de moule est une cavité de moule (28) définie par un moule d'un système de moulage par injection.

3. Procédé selon l'une quelconque des revendications 1 et 2, dans lequel le modèle de maillage (204) de l'unité d'injection (16) comporte au moins une pointe et un diamètre de vis, un capuchon d'extrémité, et une buse de l'unité d'injection (16).

4. Procédé selon l'une quelconque des revendications 1 à 3, dans lequel les paramètres comportent au moins une température de fusion à laquelle le matériau (18) doit être chauffé dans chaque zone, et une température ambiante.

5. Procédé selon l'une quelconque des revendications 1 à 4, comprenant en outre la délivrance en sortie d'une courbe de position de course en fonction du temps en tant que modèle de processus machine.

**6.** Procédé selon l'une quelconque des revendications 1 à 5, comprenant en outre la délivrance en sortie d'au moins l'une parmi une courbe de pression d'injection de plastique prédite, une courbe d'historique de pression de cavité prédite et une courbe d'historique de température de moule.

**7.** Procédé selon l'une quelconque des revendications 1 à 6, comprenant en outre la délivrance en sortie de la courbe d'historique de pression de cavité prédite en tant que modèle correspondant au processus de moulage.

**8.** Procédé selon l'une quelconque des revendications 1 à 7, comprenant en outre la délivrance en sortie de la courbe d'historique de température de moule en tant que modèle correspondant au processus de moulage.

**9.** Procédé selon l'une quelconque des revendications 1 à 8, comprenant en outre l'affichage de résultats de prédiction sur un afficheur du dispositif informatique (141, 142) du fonctionnement simulé en tant qu'un affichage statique ou un affichage dynamique.

**10.** Système (10) comprenant :

une machine de moulage par injection comportant une unité d'injection (16) ayant au moins une vis et un cylindre (17), la vis étant positionnée dans le cylindre (17) pour délivrer un matériau à travers une buse dans un moule à injection ;
au moins un dispositif informatique (141, 142) configuré pour :

générer un modèle de maillage (202) d'une structure de moule ;
générer un modèle de maillage (204) de l'unité d'injection, comportant au moins la vis et une taille et un diamètre de cylindre ;
recevoir une spécification du matériau (18) à injecter dans la structure de moule ;
recevoir une configuration de paramètres dans différentes zones d'au moins l'une parmi l'unité d'injection et la structure de moule ;
combiner (208) les modèles de maillage de la structure de moule et de l'unité d'injection ;
fournir la possibilité d'appliquer au moins l'un parmi un profil de vitesse et un profil de pression de la pointe de vis ; et
exécuter un fonctionnement simulé (210) des modèles de maillage combinés de l'unité d'injection et de la structure de moule.

**11.** Système selon la revendication 10, dans lequel le modèle de maillage (202) de l'unité d'injection (16) comporte au moins une pointe et un diamètre de vis, un capuchon d'extrémité, et une buse de l'unité d'injection.

**12.** Système selon l'une quelconque des revendications 10 à 11, dans lequel les paramètres comportent au moins une température de fusion à laquelle le matériau doit être chauffé dans chaque zone, et une température ambiante.

**13.** Système selon l'une quelconque des revendications 10 à 12, dans lequel le dispositif informatique (141, 142) est configuré pour délivrer en sortie au moins l'une parmi :

une courbe de position de course en fonction du temps en tant que modèle de processus machine ;
une courbe de pression d'injection de plastique prédite comme modèle de processus machine ;
une courbe d'historique de pression de cavité prédite en tant que modèle de processus de machine ;
une courbe d'historique de température de moule en tant que modèle de processus machine ;
une courbe de température de plastique en tant que modèle de processus machine ; et
une courbe de pression de buse en tant que modèle de processus machine.

**14.** Support lisible par ordinateur non transitoire incorporant de manière tangible des instructions exécutables par ordinateur qui, lorsqu'elles sont exécutées par un processeur, amènent le processeur à effectuer des opérations comprenant :

la génération d'un modèle de maillage (202) d'une structure de moule ;
la génération d'un modèle de maillage (204) d'une unité d'injection (16) d'une machine de moulage par injection, comportant au moins une pointe de vis de l'unité d'injection et une taille et un diamètre d'un cylindre (17) ;
la fourniture de la capacité de spécifier un matériau (18) à injecter dans la structure de moule ;
la configuration de paramètres dans différentes zones d'au moins l'une parmi l'unité d'injection (16) et la structure de moule ;
la combinaison (208) des modèles de maillage de la structure de moule et de l'unité d'injection (16) ;
la fourniture de la capacité d'appliquer un profil de vitesse et/ou de pression de la pointe de vis ; et
l'exécution d'un fonctionnement simulé (210) des modèles de maillage combinés de l'unité d'injection (16) et de la structure de moule.

15. Support lisible par ordinateur non transitoire selon la revendication 14, dans lequel la structure de moule est une cavité de moule (28) définie par un moule d'un système de moulage par injection.

*FIG. 1*

*FIG. 2*

*100*

Install the sensors in a new or an existing mold and target molding machine — *102*

Run simulation of mold and machine domain to obtain pressure/clamp force curves and time-dependent mold pressure animations — *104*

Display and store data resulting from simulation — *106*

Determine and output a calibrated clamp force curve — *108*

Determine key process variables from curves and simulation plots — *110*

*FIG. 3*

FIG. 4

Mold ←——————————→ Injection Molding Machine

Cavity

Barrel      Screw

Nozzle

Runner

Nozzle Tip    Nozzle

End Cap    Screw

*FIG. 5A*

Ambient Environment ←——————————→ Injection Molding Machine

Air

Barrel      Screw

Nozzle

Nozzle Tip    Nozzle

End Cap    Screw

*FIG. 5B*

FIG. 6A

FIG. 6B

FIG. 6C

FIG. 7A

FIG. 7B

*FIG. 8*

*FIG. 9*

When the user moves the cursor, the graphics will vary

— Injection Volume
— — Injection Pressure
······ Cavity Pressure

3D Model
Animation

7.665 cu in.

3501 psi
1454 psi

## FIG. 10

When the user moves the cursor, the graphics will vary

— Injection Volume
— — — Injection Pressure
— — Cavity Pressure

3D Model
Animation

7.623 cu in.

4900 psi

967.6 psi

## FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1044781 A2